# EUROPÄISCHE PATENTANMELDUNG

(11) **EP 0 898 251 A2**
(43) Veröffentlichungstag der Anmeldung: **24.02.1999**
(21) Anmeldenummer: 98114965.1
(22) Anmeldetag: 10.08.1998
(51) Int. Cl.: G07F 5/24, G07D 1/04, G07F 9/08

(54) **An eine Währungsumstellung anpassbarer geldbetätigter Automat und entsprechendes Anpassverfahren**

(30) Priorität: 16.08.1997 DE 19735490; 08.12.1997 DE 19754310
(71) Anmelder: NSM AKTIENGESELLSCHAFT, 55411 Bingen (DE)
(72) Erfinder: Schulze, Ulrich, 65191 Wiesbaden (DE); Mulder, Arjen J., 55413 Manubach (DE)
(74) Vertreter: Becker, Bernd, Dipl.-Ing.

(57) **Zusammenfassung**

Ein geldbetätigter Automat enthält zur Ermöglichung einer einfachen und zeitsparenden Umstellung von einer alten auf eine neue Währung einen zwischen mindestens zwei verschiedenen Prüfzuständen umschaltbaren Geldprüfer (10) und ein zwischen zwei Betriebsarten umschaltbares Programm (14) für die Zuteilung geprüfter Geldstücke an ein Auszahlungsmagazin (20). Der Geldprüfer (10) akzeptiert in seinem ersten Prüfzustand nur die alte Währung und in seinem zweiten Prüfzustand sowohl die alte als auch die neue Währung. Das Zuteilungsprogramm leitet in seiner ersten Betriebsart nur Geldstücke der alten Währung und in seiner zweiten Betriebsart nur Geldstücke der neuen Währung in das Auszahlungsmagazin (20). Zur Umschaltung des Geldprüfers (10) aus dem ersten in den zweiten Prüfzustand ist eine Verbindung (55) zu einem Termingeber (70) vorgesehen, der zum Termin des Beginns der Währungsumstellung automatisch ein entsprechendes Umschaltsignal (T1) liefert. Die Umschaltung des Zuteilungsprogramms ist funktionell mit dem Austausch des Auszahlungsmagazins (20) und mit dem zweiten Prüfzustand des Geldprüfers (10) gekoppelt.

## Beschreibung

Die Erfindung bezieht sich auf einen geldbetätigten Automaten, der Einrichtungen zur Umstellung von einer alten auf eine neue Währung enthält, der umschaltbar ist zwischen einem ersten Prüfzustand, in welchem er Geldstücke nur der alten Währung als gültig akzeptiert, und einem zweiten Prüfzustand, in welchem er Geldstücke beider Währungen als gültig akzeptiert, und der die Weiterleitung der jeweils akzeptierten Geldstücke wahlweise, entsprechend einem einstellbaren Zuteilungsprogramm, zwischen einer Kasse und einem Auszahlungsmagazin aufteilt. Die Erfindung betrifft auch ein Verfahren zum Anpassen des Automaten an die Regeln einer Währungsumstellung.

Geldbetätigte Automaten enthalten einen Geldprüfer, der das eingegebene Geld auf Gültigkeit prüft und eine vorgewählte Gegenleistung liefert, wenn der Wert der als gültig akzeptierten Geldmenge den für die gewählte Gegenleistung angegebenen Wert erreicht hat. Solche Automaten sind gemeinhin so ausgelegt, daß sie Geld in verschiedener Stückelung akzeptieren, meist Hartgeld (Münzen) und häufig auch Papiergeld (Banknoten), jeweils unterschiedlichen Wertes. Die vorliegende Erfindung ist in dieser Hinsicht nicht auf Automaten für die eine oder die andere Geldart beschränkt, und dementsprechend umfaßt der in der nachstehenden Beschreibung und in den Ansprüchen verwendete Begriff Geldstücke sowohl Münzen als auch Banknoten.

Die Gegenleistung eines Automaten kann eine Sachleistung und/oder eine Dienstleistung sein. Sachleistungen bestehen z.B. in der Ausgabe von Waren oder Tickets oder Wechselgeld, Dienstleistungen eines Automaten können z.B. die Erstellung einer Telefonverbindung, die Erteilung einer Erlaubnis oder die Freigabe eines Glücks- bzw. Geschicklichkeitsspiels sein. In allen Föllen sollte der Automat auch zur Auszahlung von Geld fähig sein, entweder um Restgeld bei Überzahlung oder Wechselgeld abzugeben oder, im Falle eines Geldspielautomaten, Spielgewinne auszuzahlen.

Die vorliegende Erfindung betrifft speziell einen Automaten mit Auszahlungsmöglichkeit, also einen Automaten, zu dessen Gegenleistung auch die Ausgabe von Wechselgeld oder Rückgeld oder von Geldgewinnen gehört. Automaten dieser Gattung enthalten ein Auszahlungsmagazin, in welches ein Teil der vom Geldprüfer akzeptierten Geldstücke geleitet wird. Die übrigen Geldstücke werden in eine Kasse geleitet, wobei die Aufteilung der Geldstücke zwischen Auszahlungsmagazin und Kasse entsprechend einem installierten Zuteilungsprogramm erfolgt. Für derartige Automaten ergeben sich besondere Probleme im Falle einer Währungsumstellung, weil hier nicht nur der Geldprüfer, sondern auch das Auszahlungsmagazin von der alten auf die neue Währung umgestellt werden muß. Generell ist davon auszugehen, daß die Geldstücke einer neuen Währung andere Abmessungen als diejenigen der alten Währung haben, so daß die körperliche Struktur des bisherigen Auszahlungsmagazins nicht mit den Geldstücken der neuen Währung zusammenpaßt. Dies gilt insbesondere für Münzröhren, deren Durchmesser auf die jeweiligen Münzdurchmesser abgestimmt sein müssen. Das Problem stellt sich in ähnlicher Weise aber auch im Falle von Banknoten-Auszahlungsmagazinen.

Eine Währungsumstellung wie etwa die bevorstehende Umstellung von nationaler Währung auf europäische Währung wird eine Übergangsphase enthalten, in welcher beide Währungen nebeneinander gültig sind. Diese Übergangsphase wird zu einem festgelegten Zeitpunkt beginnen, bestimmt durch Datum und Uhrzeit. Auch für das Ende der Übergangsphase, also den Beginn der alleinigen Gültigkeit der neuen Währung, wird ein bestimmter Termin fest-gelegt. Am günstigsten sowohl für die Kundschaft als auch für Übergangsphase so schnell wie möglich auf den Empfang beider Währungen umgestellt wird. Aus der DE 195 45 417 A1 ist es bekannt, den Geldprüfer bereits vor der Währungsumstellung so auszubilden, daß er durch einfache Betätigung eines Schalters umschaltbar ist von einem ersten Prüfzustand, in welchem er Geldstücke nur der alten Währung akzeptiert, in einen zweiten Prüfzustand, in welchem er Geldstücke beider Währungen akzeptiert, und schließlich in einen dritten Prüfzustand, in welchem er Geldstücke nur der neuen Währung akzeptiert. Im ersten Prüfzustand des Geldprüfers, also vor der Übergangsphase, soll das Geld-Zuteilungsprogramm so arbeiten, daß Geldstücke nur der alten Währung in das Auszahlungsmagazin geleitet werden. Mit Umschaltung des Geldprüfers in den zweiten Prüfzustand wird gleichzeitig das Zuteilungsprogramm so geändert, daß Geldstücke beider Währungen in das Auszahlungsmagazin geleitet werden. Ferner ist vorgesehen, zu einem späteren Zeitpunkt während der Übergangsphase das Zuteilungsprogramm so zu ändern, daß Geldstücke nur der zweiten Währung in das Auszahlungsmagazin gelangen.

Dieses bekannte Prinzip erfordert einen mehrmaligen Besuch des Automaten durch das Wartungspersonal im Verlauf der Währungsumstellung. Zu Beginn der Übergangsphase muß ein Besuch abgestattet werden, um den Schalter zur Aktivierung des zweiten Prüfzustandes des Geldprüfers zu betätigen. Im späteren Verlauf der Üergangsphase ist ein weiterer Besuch erforderlich, um das Zuteilungsprogramm neu einzustellen, so daß nur Geldstücke der neuen Währung in das Auszahlungsmagazin gelangen. Schließlich muß bei Beendigung der Übergangsphase nochmals ein Besuch erfolgen, um den Schalter zur Aktivierung des dritten Prüfzustandes des Geldprüfers zu betätigen, so daß nur Geldstücke der neuen Währung akzeptiert werden. Des weiteren ist die (zumindest vorübergehende) Installation eines Auszahlungsmagazins erforderlich, das beide Währungen aufnehmen kann. Der Einbau eines solchen Magazins in bereits vorhandenen Automaten ist problematisch, da es mehr Platz als ein für eine einzige Währung ausgelegtes Magazin benötigt, falls man nicht eine Einschränkung der Stückelungsvielfalt pro Währung in Kauf nehmen will. Letzteres kann aber insbesondere bei Automaten mit Restgeldrückgabe nachteilig sein. Eine schnelle oder gar sofortige Anpassung des Automatenbetriebs an die Termine einer Währungsumstellung ist für einen Automatenbetreiber, der eine große Vielzahl von Automaten betreut, mit dem beschriebenen Stand der Technik aus Personalgründen kaum möglich, so daß Umsatzverluste in der Zeit der Währungsumstellung in Kauf genommen werden müssen.

Die Aufgabe der vorliegenden Erfindung ist es, Maßnahmen zu treffen, um einen geldbetätigten Automaten stufenweise, aber ohne die Gefahr von Umsatzverlusten, an eine Währungsumstellung anzupassen, wobei der Automat in jeder Stufe der Umstellung attraktiv für die Kundschaft bleibt. Diese Aufgabe wird erfindungsgemäß gelöst durch die im Anspruch 1 beschriebenen Merkmale eines Automaten sowie durch das im Anspruch 9 beschriebene Verfahren.

Ein erfindungsgemäßer Automat enthält eine Geldprüf-Umschalteinrichtung, die mit einem Termingeber verbunden ist, der zum Zeitpunkt des Beginns der Gültigkeit der neuen Währung automatisch ein erstes Aktivierungssignal liefert zum Umschalten des Geldprüfers von einem ersten Prüfzustand, in welchem Geldstücke nur der alten Währung akzeptiert werden, in einen zweiten Prüfzustand, in welchem Geldstücke beider Währungen akzeptiert werden. Ferner ist eine Auszahlungs-Umschalteinrichtung vorgesehen, die nur während des zweiten Prüfzustandes des Geldprüfers und nur in Verbindung mit einem Austausch des Auszahlungsmagazins aktivierbar ist, um das Zuteilungsprogramm aus einer anfänglichen Betriebsart, in welcher Geld nur der alten Währung in das Auszahlungsmagazin weitergeleitet wird, in eine zweite Betriebsart zu ändern, in welcher Geld nur der neuen Währung in das Auszahlungsmagazin weitergeleitet wird.

Durch die Verbindung der Geldprüf-Umschalteinrichtung mit dem Termingeber ist dafür gesorgt, daß der Automat sofort im Augenblick des Beginns der Währungsumstellung auch Geldstücke der neuen Währung akzeptiert, ohne daß eine mehr oder weniger lange Wartezeit bis zum Eintreffen eines Umstellungstechnikers in Kauf genommen werden muß. Das Entfallen der Wartezeit hat für den Betreiber den Vorteil ungeschmälerten Umsatzes und bedeutet zugleich eine besondere Attraktivität für die Kundschaft in der Frühphase der Währungsumstellung. Hinzu kommt noch der gewichtige Vorteil, daß auf ein Auszahlungsmagazin verzichtet werden kann, welches gleichzeitig beide Währungen aufnimmt, denn ein solches Magazin würde die oben genannten Probleme hinsichtlich der Automatenkonstruktion bzw. hinsichtlich der Stückelungsmöglichkeit in der Auszahlung bringen. Diesen Vorteilen gegenber ist der Nachteil, daß Auszahlungen vorläufig noch in der alten Währung erfolgen, vergleichsweise gering.

In der unvermeidlichen Zeitspanne vom Beginn der Gültigkeit der neuen Währung bis zum Eintreffen eines Technikers, der das alte Auszahlungsmagazin gegen ein neues austauscht, ergibt sich also eine recht zufriedenstellende Situation. Somit ist es tragbar, für die Betreuung auch einer Vielzahl von Automaten relativ wenig Personal einzusetzen. Die erfindungsgemäße funktionelle Koppelung des Magazinaustauschs mit der Umstellung des Zuteilungsprogramms erhöht zudem die Sicherheit einer korrekten Umstellung des Automaten.

Vorteilhafte Ausgestaltungen der Erfindung sind in den Unteransprüchen gekennzeichnet. Demnach kann der Termingeber eine im Automaten installierte Uhr mit Datumsanzeige sein, oder es kann eine Verbindung über ein Kommunikationsnetz mit einem entfernten Termingeber bestehen. Besonders vorteilhaft ist es ferner, eine Fühleinrichtung vorzusehen, die ein für die neue Währung ausgelegtes Auszahlungsmagazin als solches erkennt und nur bei diesem Erkennen die Änderung des Zuteilungsprogramms für das Auszahlungsmagazin freigibt.

Nach dem Wechsel des Auszahlungsmagazins braucht für die weiteren Phasen der Währungsumstellung kein Technikerbesuch mehr zu erfolgen, wenn gemäß einer besonderen Ausführungsform der Erfindung der Termingeber so ausgelegt ist, daß er zum Zeitpunkt des Endes der Gültigkeit der alten Währung ein diesbezügliches Signal liefert, welches die Geldprüf-Umschalteinrichtung veranlaßt, den Geldprüfer in einen dritten Prüfzustand zu versetzen, in welchem er Geld nur der neuen Währung akzeptiert. Im übrigen kann der Automat auch als reiner Geldwechsler zwischen der alten und der neuen Währung betrieben werden.

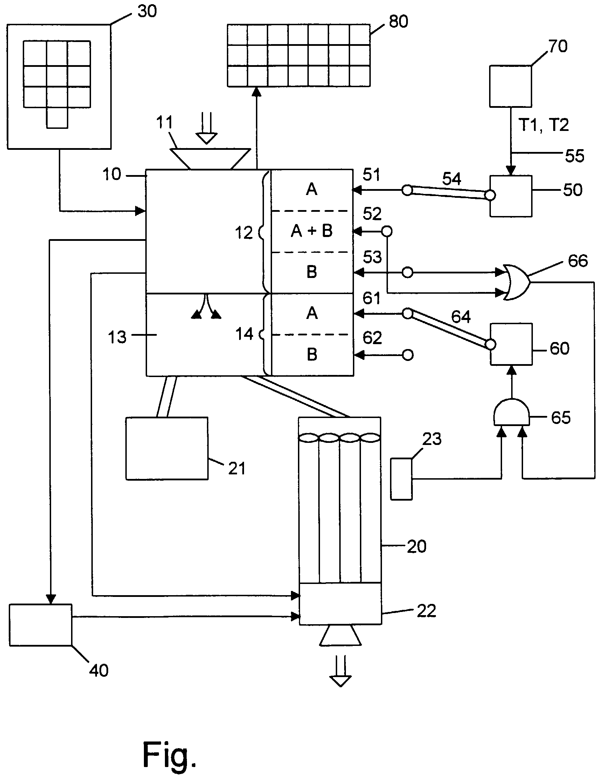

Das Prinzip der Erfindung sowie besondere Ausgestaltungen werden nachstehend erläutert, teilweise unter Bezugnahme auf die beigefügte Zeichnung, deren einzige Figur ein Funktions-Block-schaltbild eines Ausführungsbeispiels eines erfindungsgemäßen Automaten zeigt.

Der in der Zeichnung dargestellte Automat enthält einen Geldprüfer 10, der Geldstücke (Münzen und/oder Banknoten) über einen oder mehrere Eingabeöffnungen 11 empfangen kann, diese Geldstücke auf Gültigkeit prüft und identifiziert und eine dem Wert der als gültig akzeptierten Geldstücke entsprechende Kreditangabe liefert, die an einem Display 80 angezeigt wird. Ungültige oder nicht-identifizierbare Geldstücke werden zurückgewiesen, entweder an den Eingabeöffnungen 11 oder über einen anderen (nicht dargestellten) Kanal. Vor oder nach der Eingabe des Geldes wählt ein Benutzer an einer Wähleinrichtung 30 die gewünschte Gegenleistung, die aus der Bereitstellung eines Gegenstandes (z.B. einer Ware) oder einer Dienstleistung (z.B. Telefonverbindung oder Geldspiel) bestehen kann. Eine Zuteilungseinrichtung 13 leitet die vom Geldprüfer 10 akzeptierten Geldstücke wahlweise in ein Auszahlungsmagazin 20 oder in eine Kasse 21.

Der Geldprüfer 10 empfängt von der Wähleinrichtung 30 ein die gewählte Gegenleistung identifizierendes Signal und vergleicht die Kreditangabe mit dem Preis der gewählten Gegenleistung z.B. anhand einer Preistabelle, und wenn die Kreditangabe den für die gewählte Gegenleistung angegebenen Wert erreicht hat, liefert er ein Freischaltsignal an eine Freigabeeinrichtung 40 für die Gegenleistung und, gegebenenfalls, ein den Betrag der Überzahlung anzeigendes Rückgeldsignal an eine mit dem Auszahlungsmagazin 20 verbundene Auszahlvorrichtung 22, die daraufhin einen der Überzahlung entsprechenden Geldbetrag ausstößt. Dabei kann es sich ausschließlich um Münzen handeln oder aber auch um Banknoten. Verschiedenartige Geldstücke werden im Auszahlungsmagazin 20 in verschiedenen Sortierfächern abgelegt, was in der Zeichnung durch senkrechte Säulen symbolisiert ist. Die Sortierfächer für Münzen sind Röhren unterschiedlichen Durchmessers.

Um den Automaten von vornherein so zu gestalten, daß er in möglichst einfacher und zufriedenstellender Weise an eine zu erwartende Währungsumstellung angepaßt werden kann, sind im Programmteil des Geldprüfers drei verschiedene Programme installiert, die selektiv aktiviert werden können. Diese Programminstallation ist in der Zeichnung rechts neben dem Geldprüfer 10 in der Form eines dreigeteilten Blockes 12 symbolisiert. Ein erstes Programm A läßt den Geldprüfer 10 Geldstücke nur der alten Währung akzeptieren, ein zweites Programm A+B sorgt dafür, daß der Geldprüfer 10 Geldstücke sowohl der alten als auch der neuen Währung akzeptiert, und ein drittes Programm B läßt den Geldprüfer 10 Geldstücke nur der neuen Währung akzeptieren. In ähnlicher Weise sind der Zuteilungseinrichtung 13 des Geldprüfers 10 verschiedene Programme zugeordnet, die selektiv aktivierbar sind und in der Zeichnung durch einen zweigeteilten Block 14 symbolisiert sind. Bei Aktivierung eines ersten Zuteilungsprogramms 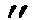 A" leitet die Zuteilungseinrichtung 13 Geldstücke nur der alten Währung in das Auszahlungsmagazin 20, und bei Aktivierung des zweiten Zuteilungsprogramms 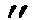 B" leitet die Zuteilungseinrichtung 13 Geldstücke nur der neuen Währung in das Auszahlungsmagazin 20. Akzeptierte Geldstücke, die nicht in das Auszahlungsmagazin 20 geleitet werden, gelangen in die Kasse 21. Die jeweiligen Zuteilungsprogramme sind so konzipiert, daß sie Geldstücke der einen oder der anderen Währung auch dann in die Kasse 21 leiten, wenn für die betreffenden Geldstücke keine passenden Sortierfächer im Auszahlungsmagazin vorhanden sind oder wenn vorhandene Sortierfächer bis zu einem vorgewählten Grad gefüllt sind. Die hierzu erforderlichen Sensoren und Signalleitungen sind in der Zeichnung nicht dargestellt.

Zur selektiven Aktivierung der verschiedenen Geldprüfprogramme 12 ist eine erste Umschalteinrichtung 50 vorgesehen, die drei verschiedene Schaltzustände einnehmen kann, symbolisiert durch einen ausgangsseitigen Schaltarm 54, der auf die Aktivierungseingänge 51, 52, 53 der drei Geldprüfprogramme A bzw. A+B bzw. B gestellt werden kann. In ähnlicher Weise ist den Zuteilungsprogrammen 14 der Zuteilungseinrichtung 13 eine zweite Umschalteinrichtung 60 zugeordnet, die zwei verschiedene Schaltzustände einnehmen kann, ebenfalls symbolisiert durch einen Schaltarm 64, um selektiv einen Aktivierungseingang 61 für das Zuteilungsprogramm A oder einen Aktiverungseingang 62 für das Zuteilungsprogramm B zu beaufschlagen.

Ein Steuereingang der ersten Umschalteinrichtung 50 ist über eine Leitung 55 mit einem Termingeber 70 verbunden, der zum Zeitpunkt des Beginns der Währungsumstellung ein erstes Umschaltsignal T1 und zum Zeitpunkt des Endes der Währungsumstellung ein zweites Umschaltsignal T2 liefert. Der Termingeber 70 kann eine im Automaten installierte Uhr mit Datumsangabe sein, oder eine fern installierte Einrichtung, die über ein Kommunikationsnetz mit der Umschalteinrichtung 50 verbunden ist.

Ein Steuereingang der zweiten Schalteinrichtung 60 ist über eine UND-Verknüpfungseinrichtung 65 mit einem Sensor 23 verbunden, der in der Nähe des Auszahlungsmagazins 20 angeordnet ist und ein für die neue Währung ausgelegtes Auszahlungsmagazin als solches erkennt, z.B. anhand einer gesondert angebrachten Kennung, und in diesem Fall ein Signal mit Aktivierungspotential an das UND-Glied 65 liefert. Ein zweiter Eingang des UND-Gliedes 65 ist über ein ODER-Glied 66 mit den Aktivierungsanschlüssen 52 und 53 der Geldprüfprogramme A+B und B verbunden.

Vorzugsweise ist dafür gesorgt, daß eine Information darüber, welches der Geldprüfprogramme 12 und welches der Zuteilungsprogramme 14 aktiviert ist, in einer Anzeigevorrichtung 80 angezeigt wird, am besten in jeweils einem dafür reservierten Feld der Anzeigevorrichtung 80. Der Termingeber 70 signalisiert über die Anzeigevorrichtung 80 optisch und/oder akustisch, daß das Auszahlungsmagazin 20 ausgetauscht werden muß.

Es sei nun die Arbeitsweise des in der Zeichnung dargestellten Automaten für die Zeiten vor, während und nach einer Währungsumstellung beschrieben. Hierzu sei angenommen, daß der Automat ein Geldspielautomat ist, bei welchem die Gegenleistung in der Freigabe eines oder mehrerer Spiele und, im Falle eines Spielgewinns, einer entsprechenden Geldausschüttung besteht. Ferner sei angenommen, daß der Automat bei Überzahlung das entsprechende Rückgeld ausliefert.

Vor Beginn der Währungsumstellung, solange das erste Umschaltsignal T1 vom Termingeber 70 ausbleibt und das Auszahlungsmagazin 20 ein die alte Währung aufnehmendes Magazin ist, aktivieren die Schalteinrichtungen 50 und 60 das Geldprüfprogramm A und das Zuteilungsprogramm A. Das heißt, in der symbolhaften Darstellung der Zeichnung steht der Schalter 54 auf dem Anschluß 51 und der Schalter 64 auf dem Anschluß 61. In der hierdurch definierten Betriebsart des Automaten werden Geldstücke nur der alten Währung akzeptiert und Geldstücke nur der alten Währung in das Auszahlungsmagazin 50 geleitet. Der Benutzer des Automaten wählt mit der Wähleinrichtung 30 eine bestimmte Spielkombination und gibt Geldstücke in die Geldeingabe 11. Das eingegebene Geld wird geprüft, und wenn der Betrag der akzeptierten Geldstücke den Preis für das gewählte Spiel zumindest erreicht hat, wird das Spiel durch die Freigabeeinrichtung 40 freigegeben. Eine eventuelle Überzahlung wird entweder mit der Auszahlvorrichtung 22 zurückerstattet oder später verrechnet. Die Rückzahlung und auch die Auszahlung eines eventuellen Gewinns nach dem Spiel erfolgt in der alten Währung. Dem Benutzer wird diese Bedingung von vornherein durch das Display 80 mitgeteilt.

Im Augenblick des Beginns der Währungsumstellung, genauer gesagt im Augenblick des Beginns der Übergangsphase, liefert der Termingeber 70 das erste Umschaltsignal T1, was die Umschalteinrichtung 50 veranlaßt, das Geldprüfprogramm A+B zu aktivieren, also den Schaltarm 54 auf den Anschluß 52 zu stellen. Für die Zuteilungseinrichtung 13 bleibt das Programm A aktiviert. Das heißt, der Geldprüfer akzeptiert sowohl die alte als auch die neue Währung, und in das Auszahlungsmagazin 20 werden nach wie vor nur Geldstücke der alten Währung geleitet. Dementsprechend zeigt das Display 80 dem Benutzer an, daß der Automat beide Währungen akzeptiert und daß Auszahlungen nur in der alten Währung erfolgen. Die Betätigungsvorgänge seitens des Benutzers und auch der Mechanismus der Spielfreigabe und Aus- bzw. Rückzahlung können der obigen Beschreibung gleichen. Gewünschtenfalls kann das nun aktivierte Geldprüfprogramm A+B dafür sorgen, daß die Kreditangabe im Display 80 in der neuen Währung oder in beiden Währungen erfolgt.

Sobald der Automatenbetreiber im Verlauf dieser Übergangsphase Gelegenheit zum Austausch des Auszahlungsmagazins hat, wird das alte, auf die alte Währung abgestimmte Auszahlungsmagazin 20 entnommen und durch ein neues ersetzt, welches die neue Währung aufnehmen kann. Das neue Magazin kann z.B unter Verwendung des alten Magazins und Modifizierung der Aufnahmefächer gebildet werden, etwa durch Einschieben von neuen Münzröhren kleineren Durchmessers in vorhandene alte Münzröhren, wie aus der DE 296 21 182 U1 an sich bekannt. Die Fühleinrichtung 23 fühlt nun das Vorhandensein des neuen Magazins und liefert ein Aktivierungspotential an einen ersten Eingang des UND-Gliedes 65. Der zweite Eingang des UND-Gliedes 65 empfängt ebenfalls Aktivierungspotential über den auf dem Anschluß 52 stehenden Arm 54 der Umschalteinrichtung 50 und über das ODER-Glied 66, so daß das UND-Glied 65 seinerseits ein Umschaltsignal an die Schalteinrichtung 60 liefert, die daraufhin das Zuteilungsprogramm B aktiviert (Schaltarm 64 wechselt vom Anschluß 61 auf den Anschluß 62). Ab diesem Zeitpunkt werden Geldstücke nur der neuen Währung in das neue Auszahlungsmagazin 20 geleitet, und dem Benutzer wird im Display 80 angezeigt, daß alle Auszahlungen in der neuen Währung erfolgen.

In dieser Betriebsart des Automaten hat der Benutzer die Möglichkeit, nicht nur Spiele zu machen, sondern auch Geld zu wechseln. Bei hoher Überzahlung in der alten Währung und Wahl eines besonders billigen Spiels erhält der Benutzer eine hohe Rückzahlung in der neuen Währung gegen einen geringen Spieleinsatz. Von dieser Möglichkeit profitiert nicht nur die Kundschaft, die eine bequeme und zugleich unterhaltsame Gelegenheit zum Geldwechseln erhält, sondern auch der Betreiber, indem er zusätzliche Spiele verkauft. Gewünschtenfalls kann der Automat in einer besonderen Ausführungsform der Erfindung so ausgebildet sein, daß er einen Geldwechsel gesondert als eigene Gegenleistung an der Wähleinrichtung 3 anbietet, vorzugsweise in Kombination mit einem bestimmten Spiel, dessen Verkaufswert weit unter der geforderten Geldleistung liegt, so daß noch ein ansehnlicher Rückzahlungsbetrag übrigbleibt.

Spätestens am Ende der Gültigkeit der alten Währung sollte das Geldprüfprogramm auf die Akzeptanz nur der neuen Währung umgeschaltet werden. Hierzu ist nur die Schalteinrichtung 50 erneut zu betätigen, um das Prüfprogramm B zu aktivieren (Überführung des Schaltsarm 54 auf den Aktivierungseingang 53; das Zuteilungsprogramm B bleibt nach wie vor aktiviert, symbolisch dargestellt durch die Verbindung des Anschlusses 53 mit einem zweiten Eingang des ODER-Gliedes 66). Diese Umschaltung kann gewünschtenfalls von Hand irgendwann kurz vor dem Ende der Übergangsphase erfolgen. Zur Erhöhung der Attraktivität des Automaten ist es jedoch günstig, wenn in einer vorteilhaften Ausgestaltung der Erfindung der frei programmierbare Termingeber 70 exakt zum Ende der Übergangsphase ein entsprechendes Umschaltsignal für die Schalteinrichtung 50 liefert. Ein Aufsuchen des Automaten ist sonach dann überflüssig.

Die vorstehend anhand des Geldspielautomaten nach der Zeichnung beschriebenen Prinzipien können auch bei andersartigen Automaten realisiert werden, z.B. bei Warenautomaten, Ticketautomaten oder Fernsprechautomaten. Bei derartigen Geräten entfallen natürlich die Einrichtungen zur Gewinnauszahlung.

Die Vorteile der Erfindung lassen sich bei allen geldbetätigten Automaten erzielen, die mit einer Auszahlvorrichtung ausgestattet sind, sei es zur Abgabe von Rückgeld bei Überzahlung oder zur Auszahlung von Spielgewinnen. Bei Spielautomaten lassen sich die Vorteile der Erfindung auch dann erzielen, wenn eine Ausgabe von Rückgeld nicht vorgesehen ist, sondern alles eingegebene Geld verspielt wird und nur Spielgewinne ausgezahlt werden. Um auch in diesem Fall die Möglichkeit eines Geldwechsels anzubieten, kann der Geldwechsel als gesondertes Spiel programmiert werden, das in jedem Fall insofern 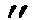 gewinnt", als es zumindest einen relativ hohen Prozentsatz des in alter Währung eingezahlten Geldes wie einen Gewinn in neuer Währung auswirft. Für ein solches 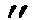 Geldwechselspiel" kann eine gesonderte Optionstaste oder Zahlenkombination an der Wähleinrichtung reserviert sein.

Es sei betont, daß die für die Erfindung wesentlichen Elemente eines Automaten in der Zeichnung nur symbolhaft als Funktionsblöcke dargestellt sind, um das Prinzip der Erfindung zu veranschaulichen. In der Praxis können die einzelnen Elemente durch unterschiedlichste Bauform realisiert sein, wobei alle signalverarbeitenden Teile vollelektronisch arbeiten und in Festkörpertechnik z.B. mittels integrierter Schaltungen ausgebildet sein können, gewünschtenfalls integriert mit den programmspeichernden und programmverarbeitenden Einrichtungen.
Dies gilt insbesondere auch für die beiden Umschalteinrichtungen 50 und 60, die in der Zeichnung nur zur Veranschaulichung als mechanische Umschalter dargestellt sind.

Die Erfindung läßt sich wie folgt zusammenfassen: Ein erfindungsgemäßer geldbetätigter Automat enthält zur Ermöglichung einer einfachen und zeitsparenden Umstellung von einer alten auf eine neue Währung einen zwischen mindestens zwei verschiedenen Prüfzuständen umschaltbaren Geldprüfer und ein zwischen zwei Betriebsarten umschaltbares Programm für die Zuteilung geprüfter Geldstücke an ein Auszahlungsmagazin. Der Geldprüfer akzeptiert in seinem ersten Prüfzustand nur die alte Währung und in seinem zweiten Prüfzustand sowohl die alte als auch die neue Währung. Das Zuteilungsprogramm leitet in seiner ersten Betriebsart nur Geldstücke der alten Währung und in seiner zweiten Betriebsart nur Geldstücke der neuen Währung in das Auszahlungsmagazin. Zur Umschaltung des Geldprüfers aus dem ersten in den zweiten Prüfzustand ist eine Verbindung zu einem Termingeber vorgesehen, der zum Termin des Beginns der Währungsumstellung automatisch ein entsprechendes Umschaltsignal liefert. Die Umschaltung des Zuteilungsprogramms ist funktionell mit dem Austausch des Auszahlungsmagazins und mit dem zweiten Prüfzustand des Geldprüfers gekoppelt. In einer besonderen Ausführungsform der Erfindung ist der Geldprüfer automatisch durch ein weiteres Signal vom Termingeber in einen dritten Prüfzustand umschaltbar, bei welchem er Gelstücke nur der neuen Währung akzeptiert. Die Erfindung ist mit besonderen Vorteilen, wenn auch nicht ausschließlich, bei Geldspielautomaten anwendbar, die für das Auszahlen nicht nur geringfügiger Beträge ausgelegt sind und somit dank der Erfindung als Geldwechsler während der Übergangsphase der Währungsumstellung benutzt werden können.

## Patentansprüche

1. Geldbetätigter Automat, der zur Umstellung von einer alten auf eine neue Währung einen die eingegebenen Geldstücke prüfenden und identifizierenden Geldprüfer enthält, der umschaltbar ist zwischen einem ersten Prüfzustand, in welchem er Geldstücke nur der alten Währung als gültig akzeptiert, und einem zweiten Prüfzustand, in welchem er Geldstücke beider Währungen als gültig akzeptiert, und der die Weiterleitung der jeweils akzeptierten Geldstücke wahlweise, entsprechend einem einstellbaren Zuteilungsprogramm, zwischen einer Kasse und einem Auszahlungsmagazin aufteilt, **gekennzeichnet durch,**
eine Geldprüf-Umschalteinrichtung (50), die mit einem Termingeber (70) verbunden ist, der zum Zeitpunkt des Beginns der Gültigkeit der neuen Währung automatisch ein erstes Umschaltsignal (T1) zum Umschalten des Geldprüfers (10) aus dem ersten in den zweiten Prüfzustand liefert, und/oder
eine Auszahlungs-Umschalteinrichtung (60), die nur während des zweiten Prüfzustandes des Geldprüfers (10) und nur in Verbindung mit einem Austausch des Auszahlungsmagazins (20) aktivierbar ist, um das Zuteilungsprogramm von einer anfänglichen Betriebsart, in welcher Geld nur der alten Währung in das Auszahlungsmagazin (20) weitergeleitet wird, in eine zweite Betriebsart zu ändern, in welcher Geld nur der neuen Währung in das Auszahlungsmagazin (20) weitergeleitet wird.

2. Automat nach Anspruch 1, **dadurch gekennzeichnet**, daß der Termingeber (70) eine im Automaten enthaltene Uhr mit Datumsanzeige aufweist.

3. Automat nach Anspruch 1, **dadurch gekennzeichnet**, daß die Geldprüf-Umschalteinrichtung (50) über ein Kommunikationsnetz an einen entfernten Termingeber angeschlossen ist.

4. Automat nach einem der Ansprüche 1 bis 3, **dadurch gekennzeichnet**, daß die Auszahlungs-Umschalteinrichtung (60) mit einer Fühleinrichtung (23) verbunden ist, die ein für die neue Währung ausgelegtes Auszahlungsmagazin (20) als solches erkennt und nur bei diesem Erkennen die Aktivierung der Auszahlungs-Umschalteinrichtung (60) freigibt.

5. Automat nach einem der Ansprüche 1 bis 4, **dadurch gekennzeichnet**, daß die Geldprüf-Umschalteinrichtung (50) beim Empfang eines zweiten Aktivierungssignals (T2), das zum Zeitpunkt des Endes der Gültigkeit der alten Währung vom Termingeber (70) geliefert wird, den Geldprüfer (10) aus dem zweiten Prüfzustand in einen dritten Prüfzustand versetzt, in welchem er Geld nur der neuen Währung akzeptiert.

6. Automat nach einem der Ansprüche 1 bis 5, **gekennzeichnet durch** eine Anzeigevorrichtung (80), die dem Benutzer den jeweiligen Prüfzustand des Geldprüfers (10) und die jeweilige Betriebsart des Auszahlungsprogramms anzeigt.

7. Automat nach einem der Ansprüche 1 bis 6, **dadurch gekennzeichnet**, daß der Termingeber (70) über die Anzeigevorrichtung (80) optisch und/oder akustisch signalisiert, daß das Auszahlungsmagazin (20) ausgetauscht werden muß.

8. Automat nach einem der Ansprüche 1 bis 7, **dadurch gekennzeichnet**, daß er ein Spielautomat mit Auszahlung von Spielgewinnen ist.

9. Automat nach Anspruch 8, **dadurch gekennzeichnet**, daß unter den wählbaren Spielen mindestens ein Spiel ist, das nur mit einem Einsatz der alten Währung und nur während derjenigen Zeit wählbar ist, in welcher der Geldprüfer (10) in seinem zweiten Prüfzustand und das Zuteilungsprogramm in seiner zweiten Betriebsart ist, und das immer mit der Auszahlung zumindest eines Teils des Wertes des Einsatzes verbunden ist.

10. Verfahren zum Anpassen eines geldbetätigten Automaten, der einen Geldprüfer und eine Auszahlungsvorrichtung enthält, an die Regeln einer Währungsumstellung, welche zu einem festgelegten ersten Termin die Gültigkeit einer neuen Währung neben einer bis dahin allein gültigen alten Währung einführt, wobei vor dem ersten Termin folgendes im Automaten eingerichtet wird:
eine Prüfsteuereinrichtung mit mindestens zwei exklusiv aktivierbaren Geldprüfprogrammen, deren erstes den Geldprüfer zur Akzeptanz von Geldstücken nur der alten Währung steuert und aktiviert ist und deren zweites den Geldprüfer zur Akzeptanz der alten und der neuen Währung steuert und noch nicht aktiviert ist;
ein erstes Auszahlungsmagazin zur Aufnahme der für Auszahlungen vorgesehenen Geldstücke;
eine Zuteilungseinrichtung mit zwei exklusiv aktiviebaren Zuteilungsprogrammen, deren erstes die Weitereitung von Geldstücken nur der alten Währung in das Auszahlungsmagazin erlaubt und aktiviert ist und deren zweites die Weiterleitung von Geldstücken nur der neuen Währung in das Auszahlungsmagazin erlaubt und noch nicht aktiviert ist,
**dadurch gekennzeichnet**,
daß als erstes Auszahlungsmagazin ein Magazin installiert wird, welches zur Aufnahme von Geldstücken nur der ersten Währung ausgelegt ist,
daß das zweite Geldprüfprogramm aktiviert wird durch ein erstes Zeitsignal, welches von einem automatischen Termingeber zum ersten Termin geliefert wird;
daß nach dem ersten Termin das erste Auszahlungsmagazin durch ein zweites Auszahlungsmagazin ersetzt wird, welches zur Aufnahme von Geldstücken nur der neuen Währung ausgelegt ist;
daß die Aktivierung des zweiten Zuteilungsprogramms koinzident mit dem Ersetzen des Auszahlungsmagazins erfolgt.

11. Verfahren nach Anspruch 10, **dadurch gekennzeichnet**,
daß vor dem ersten Termin in der Prüfsteuereinrichtung ein noch nicht aktiviertes drittes Geldprüfprogramm installiert wird, das bei seiner Aktivierung den Geldprüfer zur Akzeptanz von Geldstücken nur der neuen Währung steuert, und
daß das dritte Geldprüfprogramm aktiviert wird durch ein zweites Zeitsignal, welches von einem automatischen Termingeber zu demjenigen Zeitpunkt geliefert wird, der für das Ende der Gültigkeit der alten Währung festgelegt ist.

12. Verfahren nach Anspruch 10 oder 11, **dadurch** **gekennzeichnet**, daß der Automat als reiner Geldwechsler zwischen der alten und der neuen Währung betrieben wird.
